# EUROPÄISCHE PATENTSCHRIFT

(11) **EP 1 288 547 B1**
(45) Veröffentlichungstag und Bekanntmachung des Hinweises auf die Patenterteilung: **18.02.2004**
(21) Anmeldenummer: 02018620.1
(22) Anmeldetag: 20.08.2002
(51) Int. Cl.: F16K 27/04

(54) **Ventil**
Valve
Soupape

(30) Priorität: 29.08.2001 DE 10141470
(43) Veröffentlichungstag der Anmeldung: 05.03.2003
(73) Patentinhaber: Grohe Water Technology AG & Co. KG, 58675 Hemer (DE)
(72) Erfinder: Humpert, Jürgen, 58675 Hemer (DE); Pawelzik, Manfred, 59494 Soest (DE)

(56) Entgegenhaltungen:
- DE-A- 3 508 893
- DE-A- 3 623 669
- DE-A- 19 913 214
- FR-A- 2 485 682
- US-A- 4 653 535

## Beschreibung

Die Erfindung betrifft ein Ventil, insbesondere ein Einhebelmischventil, mit wenigstens zwei zueinander verschiebbaren Scheiben, von denen wenigstens eine der Scheiben eine oder mehrere Durchtrittsöffnungen aufweist, und die Scheiben zusammen mit den zugehörigen Dicht- und Gleitelementen in einem, aus einem Boden oder einer ortsfest gehaltenen Scheibe und einer Kapsel gebildeten, Öffnungen für den Zu- und Abfluss und ein Ventilstellglied enthaltenden Gehäuse angeordnet sind, so dass das Gehäuse mit den Ventilelementen als Ventilkartusche mit einem Armaturenkörper verbindbar ist, wobei die Kapsel mit einer zum Boden und/oder zu der ortsfest gehaltenen Scheibe abgekehrten, auf das Einbaumaß nacharbeitbaren Stirnseite versehen ist, an der ein Ringelement zur Befestigung der Ventilkartusche am Armaturenkörper anliegt.
Ein derartiges Ventil ist aus der Druckschrift DE 199 13 214 A1 bekannt. Bei dieser Ventilausbildung ist es erforderlich, dass im Aufnahmeraum des Armaturenkörpers für die Ventilkartusche eine mit einem bestimmten Abstand zum Grund ausgebildete Kammerschulter mit einer Auflagefläche für eine Gewinderingmutter vorgesehen ist. Außerdem ist für die Nacharbeit der Ventilkartusche auf das Einbaumaß eine weitere, mit Fertigungstoleranzen behaftete Vorrichtung erforderlich.

Der Erfindung liegt die Aufgabe zugrunde, das im Oberbegriff des Anspruchs 1 angegebene Ventil zu verbessern und insbesondere so auszubilden, dass die am Armaturenkörper in dem Aufnahmeraum angeformte Kammerschulter entfallen kann.

Diese Aufgabe wird nach der Erfindung bei einem gattungsgemäßen Ventil dadurch gelöst, dass die Kapsel mit einer zur Kapsel axial verschiebbaren Metallhülse umgeben ist, deren Länge das Einbaumaß bestimmt. Weitere Ausgestaltungen der Erfindung sind in den Ansprüchen 2 bis 10 angegeben.

Mit diesen erfindungsgemäßen Maßnahmen wird insbesondere erreicht, dass der Aufnahmeraum für die Ventilkartusche im Armaturenkörper einfacher und kostengünstiger hergestellt werden kann, da die mit engen Fertigungstoleranzen behaftete Ringschulter entfallen kann. Außerdem wird,beim Nacharbeiten der Kapsel das Einbaumaß von der Metallhülse direkt vorgegeben, so dass eine nahezu frei von Fertigungstoleranzen erstellbare Ventilkartusche ermöglicht wird.

In weiterer Ausgestaltung der Erfindung kann die Kapsel im mittleren zylindrischen Bereich mit drei oder vier symmetrisch angeordneten, radial vorstehenden warzenförmigen Vorsprüngen versehen sein, an die die Metallhülse mit der Innenwandung derart anliegt, dass sie in der Stecklage auf der Kapsel gehalten ist und nur durch eine zusätzliche axiale Krafteinlenkung relativ zur Kapsel verschiebbar ist. Die warzenförmigen Vorsprünge ermöglichen außerdem, dass die Kapsel, verursacht z.B. durch Fertigungstoleranzen der einzelnen Ventilelemente, bis zu einem gewissen Grade verkippt in der Metallhülse aufgenommen werden kann.
Anstatt der warzenförmigen Vorsprünge kann auch ein umlaufender Wulst an der zylindrischen Außenmantelfläche der Kapsel angeformt sein. Alternativ kann auch ein zwischen der zylindrischen Außenwandung der Kapsel und der Innenwandung der Metallhülse angeordneter Elastomerring vorgesehen sein.

Ausführungsbeispiele der Erfindung sind in der Zeichnung dargestellt und werden im Folgenden näher beschrieben. In der Zeichnung zeigt
- Figur 1: ein zum Teil dargestelltes Einhebelmischventil mit einer in einem Aufnahmeraum einmontierten Ventilkartusche im Längsschnitt;
- Figur 2: den im Figur 1 mit einem Kreis II eingegrenzten Bereich in vergrößerter Darstellung;
- Figur 3: die in Figur 1 gezeigte Ventilkartusche, ausgebaut aus dem Armaturenkörper;
- Figur 4: die in Figur 3 gezeigte Ventilkartusche vor der Nacharbeitung der vorstehenden Stirnseite;
- Figur 5: die in Figur 1 gezeigte Metallhülse in verkleinerter Darstellung in Perspektivansicht;
- Figur 6: die in Figur 5 gezeigte Metallhülse in Seitenansicht;
- Figur 7: die in Figur 6 gezeigte Metallhülse in Draufsicht;
- Figur 8: ein weiteres Ausführungsbeispiel einer Ventilkartusche in schematischer Darstellung;
- Figur 9: die in Figur 7 gezeigte Ventilkartusche in Draufsicht.

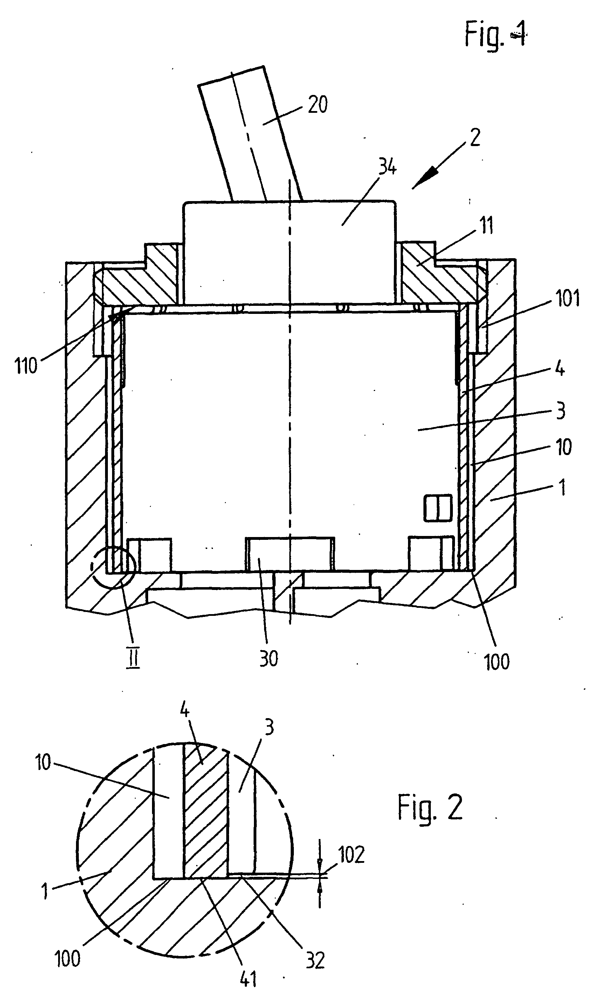

Der Einfachheit halber sind bei den Ausführungsbeispielen in der Zeichnung gleiche oder entsprechende Elmente mit jeweils gleichen Bezugszeichen versehen.
Das in Figur 1 gezeigte Eingriffmischventil weist einen Armaturenkörper 1 auf, der in der Zeichnung nur im Bereich eines Aufnahmeraums 10 dargestellt ist.
In dem Aufnahmeraum 10 ist eine Ventilkartusche 2 angeordnet. Die in der Ventilkartusche 2 angeordneten Ventilelemente, bestehend aus wenigstens zwei zueinander verschiebbaren Scheiben, wobei wenigstens eine der Scheiben eine oder mehrere Durchtrittsöffnungen aufweist, und den dazugehörigen Dicht- und Gleitelementen, sind in einer zylindrischen Kapsel 3 angeordnet, die mit einem Halsstück 34 aus dem Aufnahmeraum 10 vorsteht. An dem dem Halsstück 34 entgegengesetzten Endbereich ist die Kapsel 3 mit einem Boden 30 verschlossen. In dem Boden 30 sind Zulauföffnungen für Kalt- und Warmwasser und eine Ablauföffnung für das in der Ventilkartusche 2 erzeugte Mischwasser ausgebildet und mit entsprechenden Kanälen im Armaturenkörper 1 verbunden, wie es allgemein bekannt ist, so dass dieses in der Zeichnung nicht dargestellt ist. Aus dem Halsstück 34 der Kapsel 3 ist ein Ventilstellglied 20 herausgeführt, an dem ein in der Zeichnung nicht dargestelltes Griffstück befestigbar ist. Mit dem ventilstellglied 20 kann in einem ersten Freiheitsgrad das Mischungsverhältnis des zufließenden Kalt- und Warmwassers und in einem zweiten Freiheitsgrad die Gesamtdurchflussmenge an der Ventilkartusche 2 eingestellt werden.

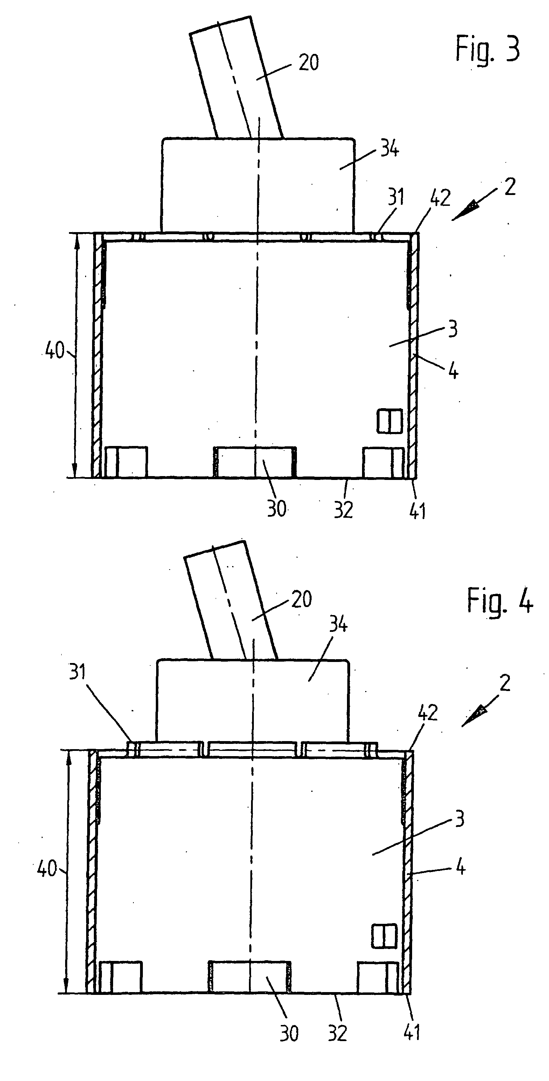

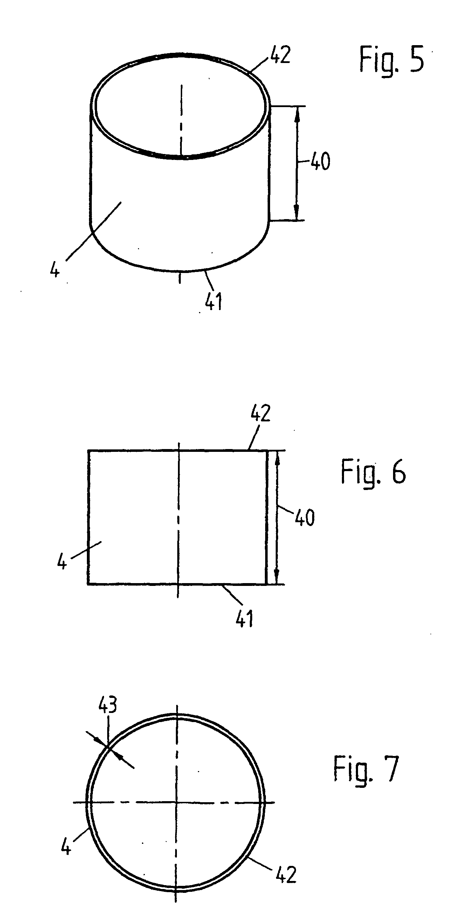

Die aus Kunststoff hergestellte Kapsel 3 hat eine konzentrisch zum Halsstück 4 auf einer Stufe axial vorstehende, nacharbeitbare Stirnseite 31, wie es insbesondere aus Figur 4 der Zeichnung zu entnehmen ist. An der gegenüberliegenden Stirnseite im Bereich des Bodens 30 bzw. des Zuflussbereichs ist eine weitere Stirnseite 32 ausgebildet.
Auf dem zylindrischen Mantelbereich der Kapsel 3 ist eine zylindrische Metallhülse 4 angeordnet. Die Metallhülse 4 ist dabei so dimensioniert, dass sie auf der Kapsel 3 verschiebbar ist. Die Metallhülse ist insbesondere in Figur 5 bis 7 dargestellt. Die Metallhülse 4 gibt dabei mit ihrer Länge 40 die Einbautiefe der Ventilkartusche 2 vor. Die Metallhülse 4 kann zweckmäßig durch einen Ablängvorgang von handelsüblichen Rohren hergestellt werden, wobei als Werkstoff zweckmäßig nichtrostender Stahl eingesetzt wird. Hierbei hat sich eine Wanddicke 43 der Metallhülse 4 von etwa 0,8 mm bis 1,6 mm als ausreichend erwiesen.

Bei der Montage der Ventilkartusche 2 werden zunächst die Ventilelemente in die Kapsel 3 eingebracht, worauf die Kapsel 3 mit dem Boden 30 verschlossen wird. Außerdem wird die Metallhülse 4 auf den äußeren zylindrischen Mantel der Kapsel 3 aufgestreift, wie es aus Figur 4 der Zeichnung zu entnehmen ist. Die nacharbeitbare Stirnseite 31 steht hierbei oberhalb einer Stirnseite 42 der Metallhülse 4. Die Stirnseite 31 ist dabei als umlaufender in Segmente unterteilter Ringwulst ausgebildet.

Zur Nacharbeitung der Kapsel 3 wird nun die komplette Ventilkartusche 2 am Bereich des Bodens 30 auf eine Anschlusskonfiguration entsprechend dem Armaturenkörper 1 aufgesetzt und die Kapsel 3 am Halsstück 34 mit einer Axialkraft derart belastet, dass die Dichtungen für das zu- und abfließende Wasser im Bereich des Bodens 30 und die Ventilelemente mit der erforderlichen Vorspannung aufeinander gedrückt werden. In dieser Axialposition wird nun die Stirnseite 31 auf das Niveau der Stirnseite 42 der Metallhülse 4 nachgearbeitet. Die Nacharbeitung kann hierbei durch einen Abschmelzvorgang oder durch Zerspanung der überstehenden Stirnseite erfolgen. Nach der Nacharbeit befindet sich die Ventilkartusche 2 in dem in Figur 3 gezeigten Zustand, in dem sich die Stirnseiten 31 mit der Stirnseite 42 deckt.
Die Zusammenmontage der Ventilkartusche 2 ist damit abgeschlossen. Die Ventilkartusche 2 kann nunmehr in den Aufnahmeraum 10 des Armaturenkörpers 1 eingesetzt werden.
Der Aufnahmeraum 10 ist im oberen Bereich offen und im unteren Bereich von einer Grundfläche 100 verschlossen, durch die die Wasserzulauf- und ablaufkanäle heraustreten. Im oberen offenen Bereich ist an der Innenwandung ein Gewinde 101 ausgebildet, in das ein Ringelement 11 mit einer parallel zur Grundfläche 100 angeordneten ebenen Stirnseite 110 eindrehbar ist. Beim Einschraubvorgang drückt somit die ebene Stirnseite 110 die Kapsel 3 an der nacharbeitbaren Stirnseite 31 nur mit der erforderlichen axialen Anpresskraft in Richtung auf den Boden 100 des Armaturenkörpers 1. Die Kapsel 3 kann hierbei, bedingt durch das von der Länge 40 der Metallhülse 4 vorgegebene Einbaumaß, nur soweit in Richtung auf die Grundfläche 100 verspannt werden, bis die erforderliche Vorspannung der Ventilelemente erreicht ist. Da in dieser Position einerseits die Stirnseite 41 an der Grundfläche 100 aufliegt und andererseits die gegenüberliegende Stirnseite 42 an der Stirnseite 110 des Ringelements 11 anliegt, wird ein weiteres gewaltsames Eindrehen des Ringelements 11 durch die Metallhülse 4 verhindert. Die Kapsel 3 ist hierbei so bemessen, dass an der der Grundfläche 100 zugekehrten Stirnseite ein Abstand 102 verbleibt, wie es insbesondere aus Figur 2 der Zeichnung zu entnehmen ist.

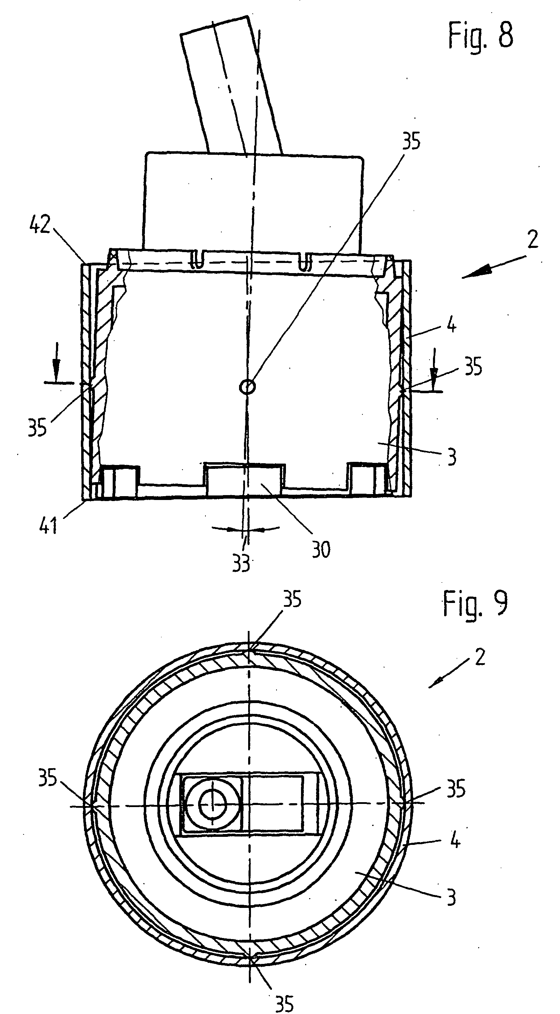

In Figur 8 und 9 ist ein abgewandeltes Ausführungsbeispiel der Ventilkartusche 2 dargestellt. An der Kapsel 3 sind hierbei im mittleren Bereich des zylindrischen Außenmantels symmetrisch vier radial vorstehende warzenförmige Vorsprünge 35 angeformt. Die Metallhülse 4 ist mit Spiel um den zylindrischen Bereich der Kapsel 3 angeordnet, wobei die Vorsprünge 35 so dimensioniert sind, dass die Metallhülse 4 klemmend in der jeweiligen Stecklage auf der Kapsel 3 in ihrer axialen Lage verharrt und ein unbeabsichtigtes Herabfallen verhindert wird. Die Metallhülse 4 kann somit nur durch eine zusätzliche axiale Krafteinlenkung relativ zur Kapsel 3 axial verschoben werden.

Durch die Vorsprünge 35 wird es hierbei außerdem ermöglicht, dass, bedingt durch Fertigungstoleranzen der Ventilelemente, die Kapsel 3 zumindest bis zu einem Winkel 33 von 1° in der Metallhülse 4 verkippt aufgenommen werden kann.

Anstatt der Vorsprünge 35 kann auch ein umlaufender Ringwulst am Außenmantel der Kapsel 3 ausgebildet sein.
Auch kann alternativ in dem Spalt zwischen dem zylindrischen Außenmantel der Kapsel und der Innenwandung der Metallhülse ein aus einem Elastomer hergestellter Ring vorgesehen werden.

Bei den vorstehend beschriebenen Ausführungsbeispielen ist das Ringelement 11 als Ringmutter ausgebildet. Selbstverständlich kann als Ringelement auch eine Befestigungsscheibe an der nachgearbeiteten Stirnseite der Ventilkartusche vorgesehen werden, die mit wenigstens zwei Schrauben an dem Armaturenkörper befestigbar ist.

Außerdem kann die Ventilkartusche auch Ventilelemente eines Absperr- und Mengenregulierventils und/oder eines Umschaltventils enthalten.

## Patentansprüche

1. Ventil mit wenigstens zwei zueinander verschiebbaren Scheiben, von denen wenigstens eine der Scheiben eine oder mehrere Durchtrittsöffnungen aufweist, und die Scheiben zusammen mit den zugehörigen Dicht- und Gleitelementen in einem, aus einem Boden (30) oder einer ortsfest gehaltenen Scheibe und einer Kapsel (3) gebildeten, Öffnungen für den Zu- und Abfluss und ein Ventilstellglied (20) enthaltenden Gehäuse angeordnet sind, so dass das Gehäuse mit den Ventilelementen als Ventilkartusche (2) mit einem Armaturenkörper (1) verbindbar ist, wobei die Kapsel (3) mit einer zum Boden (30) und/oder zu der ortsfest gehaltenen Scheibe abgekehrten, auf das Einbaumaß nacharbeitbaren Stirnseite (31) versehen ist, an der ein Ringelement (11) zur Befestigung der Ventilkartusche (2) am Armaturenkörper (1) anliegt, **dadurch gekennzeichnet, dass** die Kapsel (3) von einer zur Kapsel (3) verschiebbaren Metallhülse (4) umgeben ist, deren Länge (40) das Einbaumaß bestimmt.

2. Ventil nach Anspruch 1, **dadurch gekennzeichnet, dass** die Kapsel (3) der Länge (40) der Metallhülse (4) an der nacharbeitbaren Stirnseite (31) angepasst ist, und dass in der Einbaulage die Metallhülse (4) mit der einen Stirnseite (41) am Armaturenkörper (1) abgestützt ist, während an der gegenüberliegenden Stirnseite (42) das am Armaturenkörper (1) befestigbare Ringelement (11) vorgesehen ist, das mit einer ebenen Stirnseite (110) sowohl an der nachgearbeiteten Stirnseite (31) der Kapsel (3) als auch an der Stirnseite (42) der Metallhülse (4) anliegt.

3. Ventil nach Anspruch 1 oder 2, **dadurch gekennzeichnet, dass** am Außenmantel der Kapsel (3) im mittleren Bereich wenigstens drei vorzugsweise vier warzenförmige radial abstehende Vorsprünge (35) angeformt sind, über die sich die Metallhülse (4) mit ihrem Innenmantel in der Stecklage klemmt, derart, dass die Metallhülse (4) in der jeweiligen Stecklage auf der Kapsel (3) verharrt und nur durch eine zusätzliche axiale Krafteinlenkung die Metallhülse (4) relativ zur Kapsel (3) verschiebbar ist.

4. Ventil nach Anspruch 3, **dadurch gekennzeichnet, dass** die Vorsprünge (35) radial so weit vorstehen, dass die Metallhülse (4) auf der Kapsel (3) um einen Winkel (33) von etwa 1° verkippbar ist.

5. Ventil nach Anspruch 3 oder 4, **dadurch gekennzeichnet, dass** anstatt der Vorsprünge ein umlaufender Ringwulst am Außenmantel der Kapsel angeformt ist.

6. Ventil nach wenigstens einem der vorhergehenden Ansprüche, **dadurch gekennzeichnet, dass** die Metallhülse (4) von einem Rohr abgelängt ist.

7. Ventil nach wenigstens einem der vorhergehenden Ansprüche, **dadurch gekennzeichnet, dass** die Metallhülse (4) eine Wanddicke (43) von etwa 0,8 mm bis 1,6 mm hat.

8. Ventil nach wenigstens einem der vorhergehenden Ansprüche, **dadurch gekennzeichnet, dass** das Ringelement (11) eine mittels Gewinde (101) am Armaturenkörper (1) gehaltene Ringmutter ist.

9. Ventil nach wenigstens einem der Anspruch 1 bis 7, **dadurch gekennzeichnet, dass** als Ringelement eine Befestigungsscheibe vorgesehen ist, die mit wenigstens zwei Befestigungsschrauben am Armaturenkörper befestigbar ist.

10. Ventil nach wenigstens einem der vorhergehenden Ansprüche, **dadurch gekennzeichnet, dass** die Metallhülse mit einem Freiraum zu dem zylindrischen Bereich der Kapsel angeordnet ist und im Freiraum ein Ring aus einem elastischen Werkstoff vorgesehen ist, der in der Stecklage von den Wandungen bis zu einem bestimmten Grade verformt wird.

## Claims

1. Valve having at least two discs displaceable with respect to one another, of which at least one of the discs has one or more through-openings, and the discs are arranged, together with the associated sealing and sliding elements, in a housing comprising a base (30), or a fixedly held disc, and an enclosure (3) and containing openings for inflow and outflow and a valve actuator, so that the housing with the valve elements is connectible as a valve cartridge (2) to the body of a fitting (1), the enclosure (3) being provided with an end face (31) that is remote from the base (30) and/or from the fixedly held disc and is subsequently machinable to the assembly dimension, on which end face there is located an annular element (11) for fixing the valve cartridge (2) to the fitting body (1), **characterised in that** the enclosure (3) is surrounded by a metal sleeve (4) axially displaceable with respect to the enclosure (3), the length (41) of the sleeve determining the assembly dimension.

2. Valve according to claim 1, **characterised in that** the enclosure (3) is matched to the length (40) of the metal sleeve ring (4) at the subsequently machinable end face (31), and **in that**, in the mounted position, the metal sleeve (4) is supported with one end face (41) on the fitting body (1), whilst at the opposite end face (42) there is provided an annular element (11) fixable to the fitting body (1), which annular element abuts with a flat end face (110) both the subsequently machinable end face (31) of the enclosure (3) and the end face (42) of the metal sleeve (4).

3. Valve according to claim 1 or 2, **characterised in that** on the outer surface of the enclosure (3) in the middle region thereof there are integrally formed at least three, preferably four, button-form radially protruding projections (35), by means of which the metal sleeve (4) is wedged with its inner surface in the mounted position, such that the metal sleeve (4) stays on the enclosure (3) in the relevant mounted position and the metal sleeve (4) is displaceable relative to the enclosure (3) only by an application of additional axial force.

4. Valve according to claim 3, **characterised in that** the projections (35) extend radially to such an extent that the metal sleeve (4) is tiltable on the enclosure (3) by an angle (33) of about 1°.

5. Valve according to claim 3 or 4, **characterised in that** instead of the projections, a circumferential annular enlargement is integrally formed on the outer surface of the enclosure.

6. Valve according to at least one of the preceding claims, **characterised in that** the metal sleeve (4) is cut from a tube.

7. Valve according to at least one of the preceding claims, **characterised in that** the metal sleeve (4) has a wall thickness (43) of about 0.8 mm to 1.6 mm.

8. Valve according to at least one of the preceding claims, **characterised in that** the annular element (11) is an annular nut retained on the fitting body (1) by means of a screw thread (101).

9. Valve according to at least one of claims 1 to 7, **characterised in that** as annular element there is provided a fixing disc, which is fastenable by means of at least two fixing screws to the fitting body.

10. Valve according to at least one of the preceding claims, **characterised in that** the metal sleeve is arranged with a free space relative to the cylindrical region of the enclosure, and in the free space there is provided a ring of a resilient material, which in the mounted position is deformed to a specific degree by the walls.

## Revendications

1. Soupape avec au moins deux disques coulissant l'un par rapport à l'autre, au moins un des disques présentant une ou plusieurs ouvertures de passage, et les disques étant disposés ensemble avec les éléments d'étanchéité et de glissement correspondants dans un boîtier constitué d'un fond (30) ou d'un disque fixe et d'une capsule (3), possédant des ouvertures pour l'admission et l'écoulement et un organe de réglage de soupape (20), de sorte que le boîtier peut être relié avec les éléments de soupape sous forme de cartouche de soupape (2) avec un corps (1), dans laquelle la capsule (3) est dotée d'une face (31) opposée au fond (30) et/ou au disque fixe, adaptable a posteriori à la cote de montage, sur laquelle se trouve un élément annulaire (11) pour la fixation de la cartouche de soupape (2) sur le corps (1),
**caractérisée en ce que**
la capsule (3) est entourée d'un manchon métallique (4) coulissant par rapport à la capsule (3) dont la longueur (40) détermine la cote de montage.

2. Soupape selon la revendication 1,
**caractérisée en ce que**
la capsule (3) est adaptée à la longueur (40) du manchon métallique (4) sur la face adaptable a posteriori (31), et dans la position de montage le manchon métallique (4) est appuyé par une face (41) sur le corps (1), tandis que sur la face opposée (42) est prévu l'élément annulaire (11) fixable sur le corps (1) qui repose par une face plane (110) aussi bien contre la face adaptable ultérieurement (31) de la capsule (3) que contre la face (42) du manchon métallique (4).

3. Soupape selon la revendication 1 ou 2,
**caractérisée en ce que**
sur l'enveloppe extérieure de la capsule (3), dans la zone centrale sont formées au moins trois, de préférence quatre saillies (35) en forme de boutons espacées radialement au moyen desquelles le manchon métallique (4) se bloque avec son enveloppe intérieure en position de fixation, de sorte que le manchon métallique (4) repose en position de fixation sur la capsule (3) et que le manchon métallique (4) ne peut coulisser par rapport à la capsule (3) que par une application de force axiale supplémentaire.

4. Soupape selon la revendication 3,
**caractérisée en ce que**
les saillies (35) sont espacées radialement de telle sorte que le manchon métallique (4) peut basculer sur la capsule (3) d'un angle (33) d'environ 1.

5. Soupape selon la revendication 3 ou 4,
**caractérisée en ce qu'**
à la place des saillies, un tore périphérique est formé sur l'enveloppe extérieure de la capsule.

6. Soupape selon au moins une des revendications précédentes,
**caractérisée en ce que**
le manchon métallique (4) est raccourci par un tube.

7. Soupape selon au moins une des revendications précédentes,
**caractérisée en ce que**
le manchon métallique (4) a une épaisseur de paroi (43) d'environ 0,8 mm à 1,6 mm.

8. Soupape selon au moins une des revendications précédentes,
**caractérisée en ce que**
l'élément annulaire (11) est un écrou annulaire maintenu au moyen d'un filetage (101) sur le corps (1).

9. Soupape selon au moins une des revendications 1 à 7,
**caractérisée en ce que**
comme élément annulaire est prévue une rondelle de fixation qui peut être fixée sur le corps par au moins deux vis de fixation.

10. Soupape selon au moins une des revendications précédentes,
**caractérisée en ce que**
le manchon métallique est disposé avec un jeu par rapport à la zone cylindrique de la capsule et que dans le jeu il est prévu un anneau en matière élastique qui est déformé en position de fixation des parois jusqu'à un degré défini.
